# EUROPEAN PATENT APPLICATION

(11) **EP 4 815 095 A1**
(43) Date of publication of application: **30.09.2026**
(21) Application number: 26168331.2
(22) Date of filing: 27.03.2026
(51) Int. Cl.: H01M 10/0587, H01M 50/528, H01M 50/533, H01M 50/534, H01M 50/536, H01M 50/538

(54) **CURRENT COLLECTING PLATE AND BATTERY UNIT COMPRISING CURRENT COLLECTING PLATE**

(30) Priority: 27.03.2025 CN 202520559515 U
(71) Applicant: Techtronic Cordless GP, Anderson, SC 29621 (US)
(72) Inventor: YI, Ding Xing, Dongguan City (CN); HAN, Zhi Qing, Dongguan City (CN)
(74) Representative: Parker, Andrew James

(57) **Abstract**

The present utility model provides a current collecting plate for a battery unit, the current collecting plate comprising: a central part; and an extension part, the extension part comprising at least two blade components that are spaced apart from each other in a circumferential direction around the central part, each blade component comprising: two radial extension edges; and a circumferential extension edge located between the two radial extension edges, the circumferential extension edge connecting the two radial extension edges at an outer peripheral side of the blade component, wherein a slot that extends radially outward from the central part is provided between a first blade component and a second blade component that are directly adjacent, a width of the slot gradually reducing radially outward from the central part. A battery unit comprising the current collecting plate is also provided. The current collecting plate of the present utility model can at least partially solve problems in the prior art such as poor welding due to thermal stress deformation of a current collecting plate during welding, and improves the reliability and welding performance of a current collecting plate.

## Description

### Technical Field

The present utility model relates to the field of batteries, in particular a current collecting plate and a battery unit comprising the current collecting plate

### Background Art

With the development of society, the battery has continuously developed quickly in terms of energy ratio, service life, etc., new energy devices with batteries, especially secondary batteries, as the energy storage apparatus have gradually become popular with consumers, and various types of batteries have gradually been applied on a large scale to various types of electronic devices. A battery that is internally provided with a cell acts as a representative of a small volume battery, has the characteristics of a small volume and being rechargeable, is widely used in various types of consumer-grade and industrial-grade electronic devices, and is able to significantly improve the experience of using electronic devices.

This type of secondary battery can be classified by shape as a cylindrical, prismatic or pouch-shaped secondary battery. Cylindrical secondary batteries have the advantages of high volume energy density, simple structure, easy assembly, convenient standardization, etc. With the development of technology, cylindrical batteries have gradually become dominant in the market. Cylindrical secondary batteries typically comprise a cylindrical electrode assembly, a cylindrical housing (also known as a "cylindrical can") that accommodates the electrode assembly, an electrolyte that is injected into the can to enable ions to move, and a current collecting plate (also known as a "busbar") used for providing an electrical connection between the electrode assembly and a corresponding battery terminal to conduct current out.

The current collecting plate is usually welded to the inside of a housing of a battery unit. During a welding operation on a current collecting plate in the prior art, heat emitted from the welding or other factors in the welding operation usually cause stress changes in the current collecting plate, resulting in deformation of the current collecting plate (larger deformation readily occurring especially near a central region of the current collecting plate); such undesirable and uneven deformation results in a poor fit between the current collecting plate and the electrode assembly, and the weld separates, the welding performance is poor, and contact is even poor.

Therefore, an improved current collecting plate and a battery unit comprising the current collecting plate are needed to solve or at least mitigate the above problems, improving the welding performance and reliability of the battery unit.

### Summary of the Utility Model

An object of the present utility model lies in providing a current collecting plate and a battery unit comprising the current collecting plate, to solve or at least mitigate the problem in the prior art of poor welding due to deformation caused by the stress distribution in a welding process of a current collecting plate, and improving the fit between the current collecting plate and an electrode assembly, improving the welding performance of the current collecting plate overall.

To at least partially achieve the above object, according to one aspect of the present utility model, a current collecting plate for a battery unit is provided, the current collecting plate comprising: a central part; and an extension part that extends radially outward from the central part, the extension part comprising at least two blade components that are spaced apart from each other in a circumferential direction around the central part, each blade component comprising: two radial extension edges; and a circumferential extension edge located between the two radial extension edges, the circumferential extension edge connecting the two radial extension edges at an outer peripheral side of the blade component, wherein the at least two blade components comprise a first blade component and a second blade component that are directly adjacent, a slot that extends radially outward from the central part being provided between the first blade component and the second blade component, wherein a width of the slot gradually reduces radially outward from the central part.

By means of the width distribution of the slot described above, the present utility model is able to effectively avoid or mitigate unwanted thermal deformation due to welding, especially deformation near the central part, such that the current collecting plate experiences more uniform forces at all positions, reducing poor contact. At the same time, the design relating to the width of the slot described above causes each blade component (especially a root part thereof) to have more elasticity, which facilitates a welding operation, and also is able to provide more active degrees of freedom during subsequent transportation, falls and vibrations during use of the battery unit, etc., to ensure a good fit between the blade component and the electrode assembly (i.e. a wound core).

In some preferred embodiments, a transition portion is formed between the radial extension edge and the circumferential extension edge of each blade component, and an opening region is formed between a transition portion of the first blade component and an adjacent transition portion of the second blade component, the opening region being connected to the slot.

In some preferred embodiments, a width of the opening region gradually increases radially outward.

In some preferred embodiments, the current collecting plate is a negative electrode current collecting plate, the negative electrode current collecting plate having a first side that faces a negative electrode end of an electrode assembly of the battery unit, and an opposite second side that faces a negative electrode terminal of the battery unit, wherein the central part of the negative electrode current collecting plate comprises a boss and a connecting part, the boss being weldable to the negative electrode terminal, to electrically connect the negative electrode current collecting plate to the negative electrode terminal, and wherein each blade component of the negative electrode current collecting plate is constructed to be weldable to the negative electrode end of the electrode assembly by means of a surface located on the first side of the current collecting plate, to electrically connect the negative electrode current collecting plate to the negative electrode end of the electrode assembly.

In some preferred embodiments, the boss and the blade component are connected to each other by means of the connecting part.

In some preferred embodiments, a plane in which the boss is located is parallel to a plane in which the blade component is located, wherein a ratio of a height difference in an axial direction between the plane in which the boss is located and the plane in which the blade component is located to a thickness of the current collecting plate is about 0.1 to about 1.5.

In some preferred embodiments, a ratio of a radial dimension of the boss to a radial dimension of the current collecting plate is about 0.1 to about 0.35.

In some preferred embodiments, the boss comprises an end surface, the end surface being constructed to be weldable to the negative electrode terminal, wherein the end surface is a flat surface.

According to the present preferred embodiments, configuring the end surface as a flat surface is beneficial for welding the surface to an inner wall surface of the housing.

In some preferred embodiments, the current collecting plate is a positive electrode current collecting plate, wherein a central part of the positive electrode current collecting plate comprises a hole that is coaxial with a central hole of the electrode assembly of the battery unit, and wherein an extension part of the positive electrode current collecting plate further comprises a connecting part located between two blade components, the connecting part extending radially further than the blade component and being constructed to be weldable to a positive electrode terminal of the battery unit, to electrically connect the positive electrode current collecting plate to the positive electrode terminal, and wherein each blade component of the positive electrode current collecting plate is constructed to be weldable to a positive electrode end of the electrode assembly by means of a surface located on a side of the positive electrode current collecting plate that faces the positive electrode end of the electrode assembly, to electrically connect the positive electrode current collecting plate to the positive electrode end of the electrode assembly.

In some preferred embodiments, the connecting part of the positive electrode current collecting plate has a strip shape that is able to extend from the central part of the positive electrode current collecting plate to the positive electrode terminal.

In some preferred embodiments, the current collecting plate comprises at least three blade components, and the slot is comprised between any two directly adjacent blade components of the at least three blade components, and a shape and a size of each slot are the same as the shape and size of the other slots.

In some preferred embodiments, a range of a ratio of a width of the slot at a position near the central part to a width at a position remote from the central part is about 1.1 to about 20.

According to these preferred embodiments, the above ratio range is beneficial for ensuring the structural strength of the blade component itself, while at least partially solving the problem in the prior art of poor welding due to deformation caused by the stress distribution in a welding process of a current collecting plate, and improving the fit between the current collecting plate and an electrode assembly, improving the welding performance and reliability of the current collecting plate overall.

In some preferred embodiments, a range of a ratio of a width of the slot at a position near the central part to a width at a position remote from the central part is about 1.2 to about 5.

In some preferred embodiments, the current collecting plate is an integral member obtained by means of performing a material removing operation and/or stamping operation on a metal plate.

According to these preferred embodiments, compared to respectively manufacturing various components and then performing combination processing, manufacturing the overall body of the present embodiments is beneficial for improving the structural strength of the current collecting plate, and improving the uniformity thereof, for example improving the consistency of thickness at various positions of the current collecting plate.

In some preferred embodiments, a thickness of the current collecting plate is the same.

In some preferred embodiments, an outer peripheral edge of the blade component is in an overall arc shape.

According to these preferred embodiments, configuring the outer peripheral edge of the blade component as an arc shape is beneficial for fitting the current collecting plate to the shape of the housing of the battery unit, facilitating operations such as mounting.

In some preferred embodiments, an outer peripheral edge of the blade component is formed with a notch.

According to these preferred embodiments, the notch is beneficial for guiding liquid, facilitating liquid electrolyte to flow in the housing of the battery unit.

According to another aspect of the present utility model, a battery unit is provided, comprising: a housing, the housing comprising a closed end and an open end that is opposite the closed end; and an electrode assembly, the electrode assembly being positioned in the housing, and being located between the closed end and the open end, and the electrode assembly comprising a negative electrode end near the closed end and a positive electrode end near the open end, and the battery unit further comprising the current collecting plate according to any one of the above solutions.

In some preferred embodiments, the closed end of the housing is integrated with a negative electrode terminal, or the closed end forms a negative electrode terminal; and wherein the battery unit further comprises a cover that cooperates with the open end of the housing to close the interior of the battery unit, the cover being integrated with a positive electrode terminal, or the cover forming a positive electrode terminal.

### Brief Description of the Drawings

To better understand the above and other objectives, features, advantages and functions of the present utility model, the preferred embodiments shown in the drawings may be referred to. In the drawings, identical reference signs denote identical components. Those skilled in the art should understand that the drawings are intended to schematically clarify preferred embodiments of the present utility model, without limiting the scope of the present utility model in any way, and the various components in the drawings are not drawn to scale.
Fig. 1 is an exploded perspective view of a battery unit according to an embodiment of the present utility model.
Fig. 2 is a planar view of a positive electrode, a negative electrode and a separator of an electrode assembly in the battery unit shown in Fig. 1 according to an embodiment of the present utility model.
Fig. 3 is a schematic cutaway view of a portion of the battery unit shown in Fig. 1.
Fig. 4 is a three-dimensional drawing of a negative electrode current collecting plate according to an embodiment of the present utility model.
Fig. 5 is a front view of the negative electrode current collecting plate shown in Fig. 4 viewed from a first side.
Fig. 6 is a front view of the negative electrode current collecting plate shown in Fig. 4 viewed from a second side that is opposite the first side.
Fig. 7 is a front view of a positive electrode current collecting plate according to an embodiment of the present utility model.

### Key to reference signs:

10 battery unit; 14 housing; 14a open end of housing; 14b closed end of housing; 18 electrode assembly; 18a positive electrode end of electrode assembly; 18b negative electrode end of electrode assembly; 62 first flattened portion; 66 second flattened portion; 38 positive electrode current collecting plate; 42 negative electrode current collecting plate; 22 first insulating component; 26 second insulating component; 70 through hole; 30 positive electrode terminal; 34 negative electrode terminal; 46 positive electrode sheet; 50 negative electrode sheet; 54 separator; 58 central through hole; 42a first side of negative electrode current collecting plate; 42b second side of negative electrode current collecting plate; 421 central part of negative electrode current collecting plate; 4211 boss of central part of negative electrode current collecting plate; 4212 connecting part of central part of negative electrode current collecting plate; 42111 end surface of boss; 422 extension part of negative electrode current collecting plate; 4221 first blade component of negative electrode current collecting plate; 42213 transition portion of the first blade component; 42214 notch of first blade component; 4222 second blade component of negative electrode current collecting plate; 4223 slot of negative electrode current collecting plate; 4224 opening region of negative electrode current collecting plate; 42221 first welded wire of second blade component of negative electrode current collecting plate; 42222 second welded wire of second blade component of negative electrode current collecting plate; 42223 transition portion of second blade component of negative electrode current collecting plate; 381 central part of positive electrode current collecting plate; 3811 hole of positive electrode current collecting plate; 382 extension part of positive electrode current collecting plate; 3821 first blade component of positive electrode current collecting plate; 38213 transition portion of first blade component of positive electrode current collecting plate; 38223 transition portion of second blade component of positive electrode current collecting plate; 3822 second blade component of positive electrode current collecting plate; 3823 slot of positive electrode current collecting plate; 3826 opening region of positive electrode current collecting plate; 3824 connecting part of positive electrode current collecting plate; 3825 third blade component of positive electrode current collecting plate.

### Detailed Description of Embodiments

Particular embodiments of the present utility model are now described in detail with reference to the drawings. The embodiments described here are merely preferred embodiments according to the present utility model; based on these preferred embodiments, those skilled in the art will be able to think of other ways in which the present utility model may be implemented, which likewise fall within the scope of the present utility model.

It must first be noted that relative positional relationships between components in the battery unit described below are all described for a state in which the components are correctly assembled.

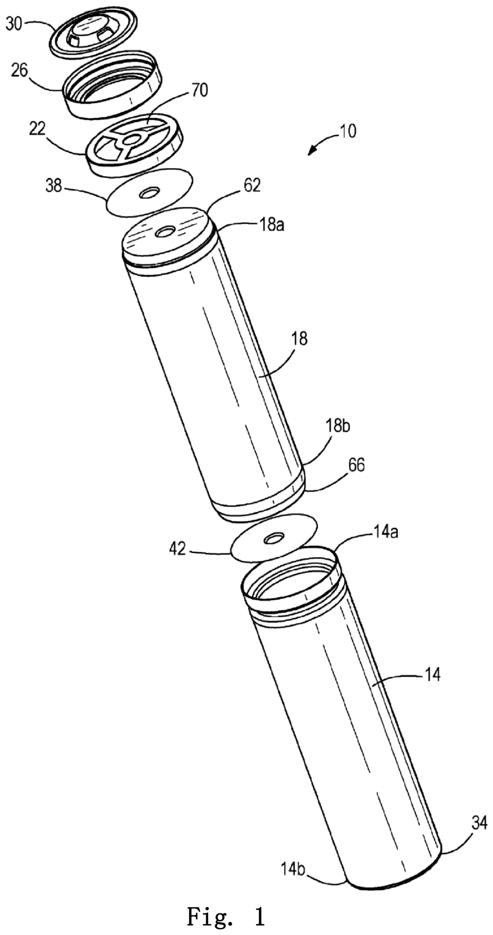

The present utility discloses a current collecting plate for a battery unit, and a battery unit comprising the current collecting plate. Next, first in conjunction with Fig. 1, a battery unit according to an embodiment of the present utility model is described. A battery unit 10 comprises a substantially cylindrical housing 14, the housing being constructed as a cylindrical can with one end open, and comprises an open end 14a and a closed end 14b that is opposite the open end. The battery unit 10 further comprises: a cover that is able to cooperate with the open end 14a of the housing 14 to close the interior of the housing; and a first insulating component 22, a second insulating component 26 and an electrode assembly 18 located inside the housing.

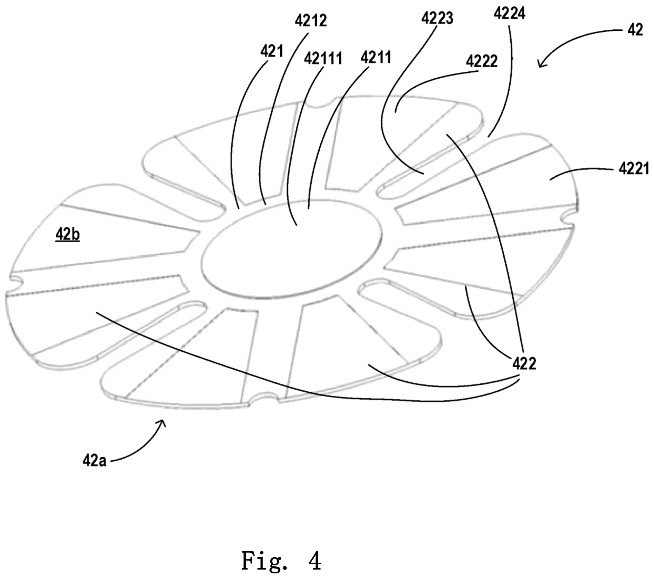

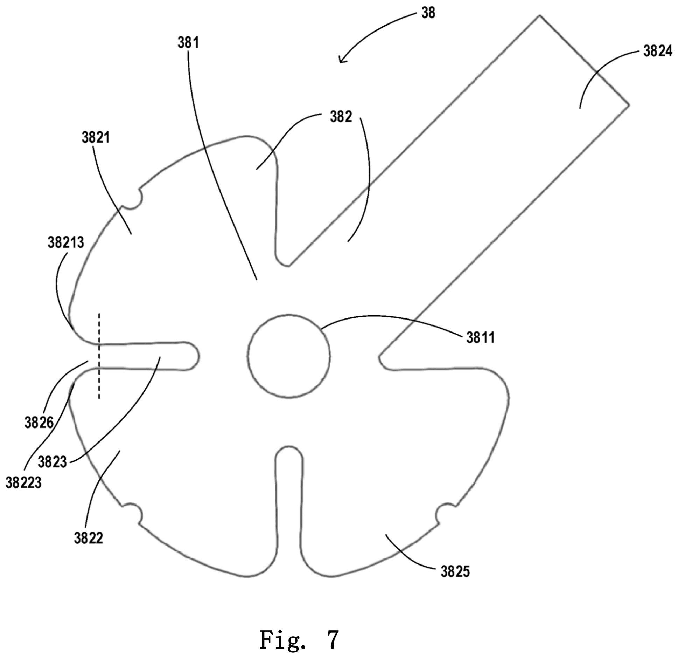

The battery unit 10 further comprises a positive electrode terminal 30 located at the open end 14a of the housing 14, a negative electrode terminal 34 located at the closed end 14b of the housing 14, a first conductor located between the electrode assembly 18 and the positive electrode terminal 30 in the housing 14 (a positive electrode current collecting plate 38 in the present embodiment, Fig. 1 only schematically using a substantially round plate-shaped component to show the positive electrode current collecting plate, not representing the specific shape thereof; the specific shape and structure are illustratively shown in Fig. 7 and detailed below), and a second conductor located between the electrode assembly 18 and the negative electrode terminal 34 in the housing 14 (a negative electrode current collecting plate 42 in the present embodiment, Fig. 1 only schematically using a substantially round plate-shaped component to show the negative electrode current collecting plate, not representing the specific shape thereof; the specific shape and structure are illustratively shown in Figs. 4 - 6 and detailed below). The positive electrode terminal 30 and the negative electrode terminal 34 of the battery unit are used for leading current out from inside the battery unit to provide electrical contact with an external apparatus, for example electrically connecting to a charging device or an electrical device, or for realising an electrical connection between different battery units.

The positive electrode terminal 30 can be integrated in the cover, in which case the cover, for example, can be made of a non-conductive material such as plastic, and an electronic element that acts as the positive electrode terminal 30 can be integrated in the cover. Alternatively, the positive electrode terminal 30 can be formed directly by the cover, in which case the cover, for example, can be made of steel, aluminium or another conductive metal material, thereby itself acting directly as the positive electrode terminal. Similarly, the negative electrode terminal 34 can be integrated in the closed end 14b of the housing 14, in which case the housing, for example, can be made of a non-conductive material such as plastic, and an electronic element that acts as the negative electrode terminal 34 can be integrated in the closed end 14b of the housing 14. Alternatively, the negative electrode terminal 34 can be formed directly by the housing 14, in which case the housing, for example, can be made of steel, aluminium or another conductive metal material, so that the closed end of the housing itself acts directly as the negative electrode terminal.

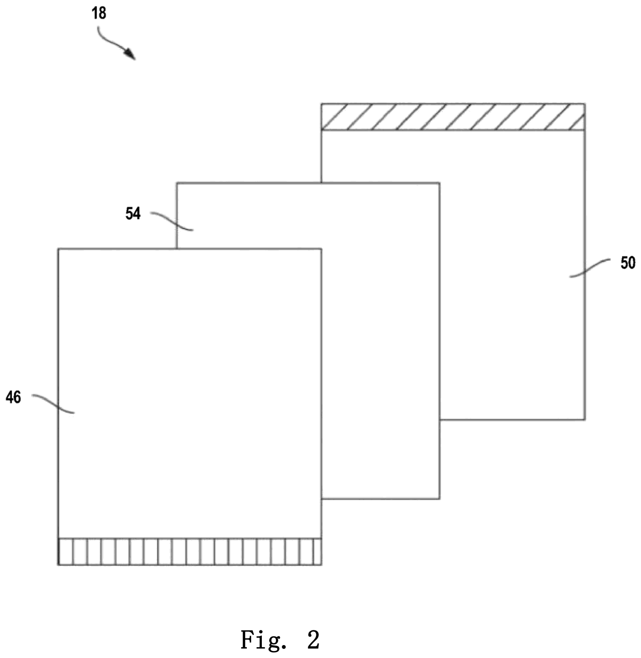

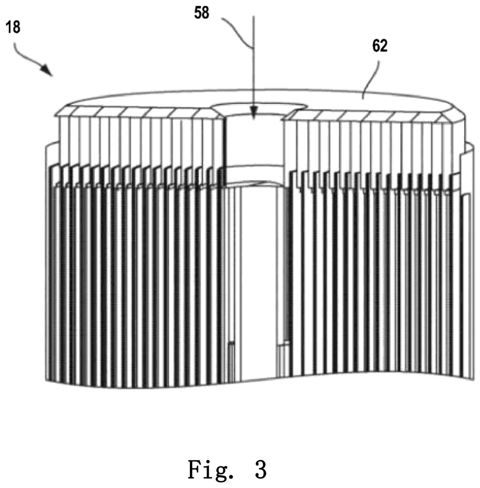

Referring to Fig. 2, the electrode assembly 18 comprises a positive electrode sheet 46, a negative electrode sheet 50, and one or more separators 54 (i.e. an insulating sheet 54) located between the positive electrode sheet 46 and the negative electrode sheet 50. As shown in Fig. 3, the multiple sheets may be rolled into concentric layers around the central hole 58 of the electrode assembly 18 to form a wound core. In some embodiments, the electrode assembly 18 is wound around a central pin, which may be removed after the winding operation is complete. After winding, a portion of exposed or uncoated electrode material of the positive electrode sheet 46 forms the positive electrode end 18a of the electrode assembly 18, and a portion of exposed or uncoated electrode material of the negative electrode sheet 50 forms the negative electrode end 18b of the electrode assembly 18. The exposed portion at the positive electrode end 18a can be flattened into a flat rough surface to form a first flattened portion 62, and an exposed portion at the negative electrode end 18b can be flattened into a flat rough surface to form a second flattened portion 66. The first flattened portion 62 provides a connecting surface for the first conductor, such that the first conductor may be connected (for example, welded, fixed, adhered, fastened, etc.) to the electrode assembly 18. Similarly, the second flattened portion 66 provides a connecting surface for the second conductor.

The first insulating component 22 is made of plastic and/or rubber. The first insulating component 22 may be provided with a through hole 70, the through hole allowing the first conductor to extend through the first insulating component 22 and contact the first terminal 30. The first flattened portion 62 can be arranged or placed in the first insulating component 22 to prevent contact between the first flattened portion 62 and the housing 14. The first terminal 30 can be arranged in the second insulating component 26 which is supported on the first insulating component 22. Once the electrode assembly 18 and other electronic elements are arranged in the housing 14, the first insulating component 22 and the second insulating component 26 are crimped on the first terminal 30.

In the present embodiment, the first conductor and the second conductor are a formable (e.g. bendable, compliant, manipulable, etc.) current collecting plate, current collector, busbar or other component capable of respectively electrically connecting the positive electrode end 18a and the negative electrode end 18b of the electrode assembly to the positive electrode end 30 and the negative electrode end 34 of the battery unit.

To solve a problem of poor welding and low reliability due to deformation easily occurring during welding of a current collecting plate in the prior art, the present utility model provides a current collecting plate for a battery unit, characterised in that the current collecting plate comprises: a central part; and an extension part extending radially outward from the central part, the extension part comprising at least two blade components that are spaced apart from each other in a circumferential direction around the central part, each blade component comprising: two radial extension edges; and a circumferential extension edge located between the two radial extension edges, the circumferential extension edge connecting the two radial extension edges at an outer peripheral side of the blade component, wherein at least two blade components comprise a first blade component and a second blade component that are directly adjacent, a slot that extends radially outward from the central part being provided between the first blade component and the second blade component, and a width of the slot gradually reducing radially outward from the central part.

In general, during the welding of the blade component of the current collecting plate to the negative electrode end of the electrode assembly, compared to a portion of the extension part that is remote from a central position of the current collecting plate, a portion of the extension part that is near the central position of the current collecting plate is subjected to more heat, generating a greater change in stress, thereby resulting in more serious thermal stress deformation. By means of the width distribution of the slot described above, the present utility model is able to effectively avoid or mitigate unwanted thermal deformation due to welding, especially deformation near the central part, such that the current collecting plate experiences more uniform forces at all positions, reducing poor contact. At the same time, the design relating to the width of the slot described above causes a root part of each blade component to have more elasticity, which facilitates a welding operation, and also is able to provide more active degrees of freedom during subsequent transportation, falls and vibrations during use of the battery unit, etc., to ensure a good fit between the blade component and the electrode assembly (i.e. a wound core). In addition, multiple blade components are separated by a slot, independent of each other and unaffected by changes in other blade components.

Preferably, a height difference in an axial direction is provided between a plane in which a boss of the current collecting plate is located and a plane in which the blade component is located, such that when the blade component of the current collecting plate changes during welding (e.g. from thermal stress deformation, etc.), the boss is unaffected by the change in the blade component, and is able to maintain a stable weld with the negative electrode terminal.

The current collecting plate according to the present utility model may act as a positive electrode current collecting plate of the first conductor, and also may act as the negative electrode current collecting plate of the second conductor. A person skilled in that art may choose to use the current collecting plate of the present utility model for a positive electrode or a negative electrode of a battery unit according to actual requirements.

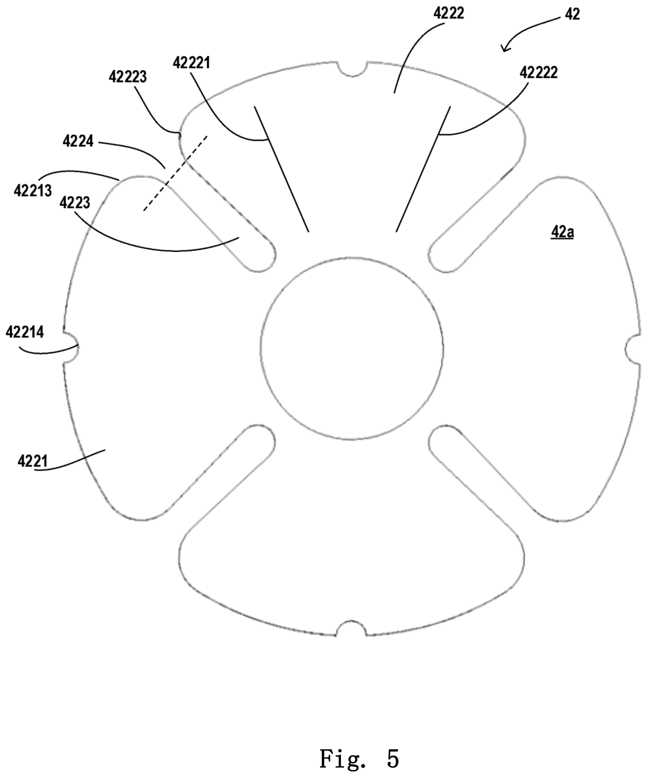

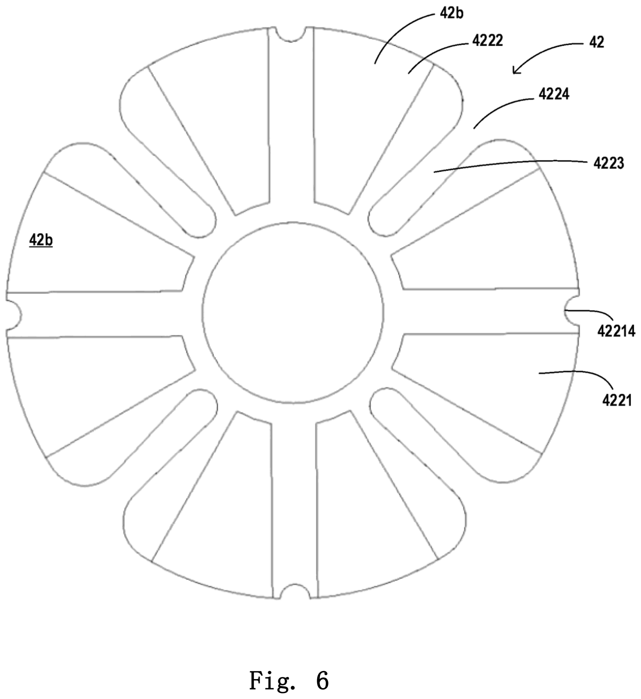

Next, referring to embodiments of Figs. 4 to 6, the current collecting plate according to the present utility model is illustratively explained by taking the negative electrode current collecting plate 42 as an example. In an assembled state, the negative electrode current collecting plate 42 has a first side 42a that faces a negative electrode end 18b of an electrode assembly 18 of the battery unit 10 (the side shown in Fig. 5), and an opposite second side 42b that faces a negative electrode terminal 34 of the battery unit 10 (the side shown in Fig. 6). It must be explained that the first side and the second side are both discussed for a state in which the negative electrode current collecting plate is correctly assembled on the battery unit. The negative electrode current collecting plate 42 comprises a central part 421 that is located at a substantially central position of the current collecting plate, and an extension part 422 that extends outward from the central part 421. The central part 421 comprises a boss 4211 and a connecting part 4212, the boss being positioned at the second side 42b of the negative electrode current collecting plate 42 and protruding toward the negative electrode terminal 34 of the battery unit 10, thereby being weldable to the negative electrode terminal 34, to electrically connect the negative electrode current collecting plate 42 to the negative electrode terminal 34. The boss 4211 and each of the multiple blade components described below are connected to each other by means of the connecting part 4212. Furthermore, a plane in which the boss is located is parallel to a plane in which the blade component is located, and the plane in which the boss is located and the plane in which the blade component is located are provided with a height difference in an axial direction that is perpendicular to an extension plane of the current collecting plate 42 (on the second side 42b of the current collecting plate, the extension plane of the boss 4211 is higher than the extension plane of the blade component), and a ratio of a value of this height difference to a thickness of the current collecting plate is preferably about 0.1 to about 1.5.

Preferably, a ratio of a radial dimension of the boss to a radial dimension of the current collecting plate is about 0.1 to about 0.35.

As described above, preferably, the negative electrode terminal 34 is integrated in a closed end 14b of a housing 14 that is near the negative electrode end 18b of the electrode assembly 18, or is formed by the closed end 14b. Preferably, the boss 4211 of the negative electrode current collecting plate 42 is constructed to protrude toward the closed end 14b of the housing, thereby being weldable to an inner wall surface of the closed end, to provide an electrical connection between the negative electrode current collecting plate and the housing.

Furthermore, the boss 4211 of the negative electrode current collecting plate 42 comprises an end surface 42111, and the end surface is weldable to the inner wall surface of the closed end 14b of the housing 14; preferably, the end surface is a flat surface. More preferably, a weld pattern that welds together the end surface 42111 of the boss and the inner wall surface of the closed end 14b of the housing is a spiral pattern. A person skilled in the art may also use another weld pattern according to actual requirements.

More preferably, a conductive material, such as copper, aluminium, an alloy, etc., is used for the negative electrode current collecting plate 42. In an embodiment, the negative electrode current collecting plate 42 comprises a copper material, and the end surface 42111 of the boss is plated with a nickel material. That is, a substrate of the negative electrode current collecting plate is made of a copper material, and only the end surface 42111 that needs to be welded to the housing is plated with a nickel material. Compared to using a nickel metal material for the whole body, using a copper material for the whole body in the present embodiment enables the whole body of the negative electrode current collecting plate to have lower internal resistance and better conductivity, and nickel plating a welding area enables the current collecting plate to weld better to the rigid housing, avoiding the problem that pure copper material is typically not easy to weld.

An extension part 422 comprises at least two blade components that are spaced apart from each other in a circumferential direction around the central part 421, each blade component extending radially outward from the central part 421. Preferably, the extension part 422 comprises at least three blade components; in the present embodiment, the negative electrode current collecting plate preferably comprises four blade components.

The at least two blade components shown in Fig. 4 comprise a first blade component 4221 and a second blade component 4222 that are directly adjacent. Each blade component comprises: two radial extension edges; and a circumferential extension edge located between the two radial extension edges, the circumferential extension edge connecting the two radial extension edges at an outer peripheral side of the blade component, and a transition portion being formed between the circumferential extension edge and each radial extension edge (for example, as shown in Fig. 5, the first blade component 4221 is provided with a transition portion 42213, and the second blade component 4222 is provided with a transition portion 42223). A slot 4223 that extends radially outward from the central part is provided between the two blade components 4221, 4222, and a width of the slot gradually reduces radially outward from the central part. Furthermore, an opening region 4224 is formed between the transition portion 42213 of the first blade component and the adjacent transition portion 42223 of the second blade component, the opening region 4224 being connected to the slot 4223, and being located at a radial outer side of the slot 4223. To facilitate differentiation and understanding, a dotted line is used in Fig. 5 to schematically indicate a demarcating line between the slot 4223 and the opening region 4224. A width of the slot 4223 at a position near the central part 421 is greater than a width at a position remote from the central part 421. The closer to the bottom of the slot (a root part position of the corresponding blade components), the greater the width. As described above, configuring the slot to have a greater width at a position near the central part can effectively reduce thermal stress deformation generated at the blade component root part during welding, and further enables the blade component to have greater elasticity, to maintain a good fit with the wound core during welding, transport or falls, etc.

Preferably, when the number of blade components is greater than two, the slot described above is comprised between each two blade components that are directly adjacent, and the shape and size of each slot are the same or similar to the shape and size of other slots; that is, multiple slots are evenly spaced apart from each other around the central part. As described above, in the present embodiment, the negative electrode current collecting plate comprises four blade components arranged at equal intervals from each other, and four slots between the blade components, the shape and size of each slot being the same as the other slots.

Furthermore, each blade component is constructed to be weldable to a positive electrode end or a negative electrode end of the electrode assembly 18 of the battery unit. A welding path may be a continuous bent extension line, a dotted or discontinuous line, etc. For example, referring to Fig. 5, taking the blade component 4222 as an example, when the negative electrode current collecting plate is welded to the negative electrode end of the electrode assembly (i.e. a wound core), the negative electrode current collecting plate is welded to the negative electrode end of the electrode assembly, i.e. welded to the second flattened portion 66 shown in Fig. 1, by means of an exemplary weld line (e.g. a first weld line 42221 and a second weld line 42222) on a surface of the blade component 4222 located on the first side 42a of the negative electrode current collecting plate.

Next, referring to the embodiment of Fig. 7, the current collecting plate according to the present utility model is illustratively explained by taking the positive electrode current collecting plate 38 as an example. Similar to the negative electrode current collecting plate described above, the positive electrode current collecting plate 38 comprises a central part 381 that is located at a substantially central position, and an extension part 382 that is located around the central part. The central part 381 of the positive electrode current collecting plate 38 comprises a hole 3811 that is coaxial with a central hole 58 of the electrode assembly 18 of the battery unit 10. An extension part of the positive electrode current collecting plate 38 comprises at least two blade components that are spaced apart from each other in a circumferential direction around the central part 381, each blade component extending radially outward from the central part; preferably, the extension part 382 of the positive electrode current collecting plate comprises at least three blade components. In the present embodiment, the positive electrode current collecting plate comprises three blade components.

The at least two blade components comprise a first blade component 3821 and a second blade component 3822 that are directly adjacent. Each blade component comprises: two radial extension edges; and a circumferential extension edge located between the two radial extension edges, the circumferential extension edge connecting the two radial extension edges at an outer peripheral side of the blade component, and a transition portion being formed between the circumferential extension edge and each radial extension edge (for example, as shown in Fig. 7, the first blade component 3821 is provided with a transition portion 38213, and the second blade component 3822 is provided with a transition portion 38223). A slot 3823 that extends radially is provided between the first blade component and the second blade component. A width of the slot 3823 gradually reduces radially outward from the central part. An opening region 3826 is formed between a transition portion of the first blade component and an adjacent transition portion of the second blade component of the positive electrode current collecting plate, the opening region 3826 being connected to the slot, and being located at a radial outer side of the slot 3823. To facilitate differentiation and understanding, a dotted line is used in Fig. 7 to schematically indicate a demarcating line between the slot 3823 and the opening region 3826. A width of the slot at a position near the central part is greater than a width at a position remote from the central part.

Preferably, when the number of blade components is greater than two, the slot described above is comprised between each two blade components that are directly adjacent, and the shape and size of each slot are the same or similar to the shape and size of other slots; that is, multiple slots are evenly spaced apart from each other around the central part. As described above, in the present embodiment, the positive electrode current collecting plate comprises three blade components arranged at equal intervals from each other, and two slots between the blade components, the shape and size of each slot being the same as the other slot.

Furthermore, each blade component of the positive electrode current collecting plate 38 is constructed to be weldable to a positive electrode end 18a of the electrode assembly 18 by means of a surface located on a side of the positive electrode current collecting plate that faces the positive electrode end 18a of the electrode assembly 18 (for a state in which the positive electrode current collecting plate is correctly assembled on the battery unit), to electrically connect the positive electrode current collecting plate 38 to the positive electrode end 18a of the electrode assembly.

Furthermore, the extension part 382 of the positive electrode current collecting plate 38 further comprises a connecting part 3824 that is located between two blade components, such as the first blade component 3821 and the third blade component 3825, the connecting part extending further radially than the blade components. The connecting part 3824 is a strip-shaped connecting part for example, such as a connecting strip or welding strip, which is constructed to be weldable to the positive electrode terminal 30 of the battery unit 10, to electrically connect the positive electrode current collecting plate 38 to the positive electrode terminal 30.

As described above, preferably, the positive electrode terminal 30 is integrated in a cover of the battery unit, or formed by the cover, and the connecting part 3824 has a strip shape that is able to extend from the central part of the positive electrode current collecting plate to the cover, thereby being weldable to the cover, to electrically connect the positive electrode current collecting plate 38 to the cover.

Preferably, like the aforementioned negative electrode current collecting plate, each blade component of the positive electrode current collecting plate of the present embodiment is constructed to be weldable to the positive electrode end of the electrode assembly of the battery unit, i.e. a first flattened portion 62.

Preferably, the positive electrode current collecting plate and/or negative electrode current collecting plate is an integral member obtained by means of performing a material removing operation and/or stamping operation on a metal plate. For example, during manufacture of the negative electrode current collecting plate, a stamping operation is performed on a central region of a metal plate (e.g. made of a copper material) from a first side 42a to obtain a boss 4211 located on a second side 42b. After, a portion of material is removed from the metal plate to form at least two blade components and a slot therebetween. The thicknesses of the various portions of the negative electrode current collecting plate thus formed are substantially uniform. In addition, a person skilled in the art may also manufacture the negative electrode current collecting plate by other means, such as respectively manufacturing a substrate and a boss (acting as separate parts), then fixing the substrate and the boss together by a connecting means such as welding or bonding, a thickness of a central region of the negative electrode current collecting plate thus formed that includes the boss being greater than a surrounding extension part. For example, during manufacture of the positive electrode current collecting plate, a portion of material may be removed from a metal plate (e.g. made of a copper material), to form a hole 3822 located in a central region, a slot between blade components and a connecting part. In addition, a person skilled in the art may also manufacture the positive electrode current collecting plate by other means, such as individually manufacturing a connecting part (forming an individual part), then fixedly connecting the strip-shaped connecting part (e.g. welding or bonding) to a corresponding position of a metal plate. Preferably, the positive electrode current collecting plate thus formed has a uniform thickness.

Preferably, regarding the slot 3823, 4223 of the positive electrode current collecting plate 38 and/or the negative electrode current collecting plate 42 above, a range of a ratio of a width of the slot at a position near the central part to a width at a position remote from the central part is about 1.1 to about 20 (this ratio may be defined as a ratio of the widest part of the slot to the narrowest part). More preferably, a ratio of a width of the slot at a position near the central part to a width at a position remote from the central part is about 1.2 to about 5. Here, the word "about" means varying within 5% above or below the numerical value.

Preferably, an outer peripheral edge of the blade component of the aforementioned current collecting plate is in an overall arc shape, to better fit to a cylindrical housing of the cylindrical battery unit, facilitating assembly.

Preferably, an outer peripheral edge of the blade component of the aforementioned current collecting plate is formed with a notch, such as the notch 42214 of the outer peripheral edge of the first blade component 4221 shown in Fig. 6. This notch is beneficial for guiding liquid, facilitating liquid electrolyte to flow in the housing of the battery unit, and is further beneficial for positioning during transportation and assembly of the current collecting plate.

The present utility model further provides a battery unit 10, comprising: a housing 14, the housing comprising a closed end 14b and an open end 14a that is opposite the closed end; and an electrode assembly 18, the electrode assembly being positioned in the housing 14, and being located between the closed end and the open end, and the electrode assembly comprising a negative electrode end 18b near the closed end and a positive electrode end 18a near the open end, and the battery unit 10 further comprising the current collecting plate discussed above.

It must be explained that the above-described embodiments of the present utility model may be combined and/or modified in various ways, and the results of such combinations and/or modifications should also be regarded as embodiments of the present utility model. The above description of various embodiments of the present utility model is provided to a person skilled in the art for the purpose of description. The present utility model is not intended to be exclusive or limited to a single disclosed embodiment. Based on the above, a person skilled in the field of the above teaching will understand various substitutes for and variants of the present utility model. Therefore, although some alternative embodiments have been specifically described, a person skilled in the art will understand, or develop with relative ease, other embodiments. The present utility model is intended to include all alternatives, modifications and variants of the present utility model described here, as well as other embodiments falling within the spirit and scope of the present utility model described above.

## Claims

1. Current collecting plate for a battery unit, **characterised in that** the current collecting plate comprises:
a central part; and
an extension part that extends radially outward from the central part, the extension part comprising at least two blade components that are spaced apart from each other in a circumferential direction around the central part, each blade component comprising:
two radial extension edges; and
a circumferential extension edge located between the two radial extension edges, the circumferential extension edge connecting the two radial extension edges at an outer peripheral side of the blade component,
wherein the at least two blade components comprise a first blade component and a second blade component that are directly adjacent, and a slot that extends radially outward from the central part is formed between the first blade component and the second blade component,
wherein a width of the slot gradually reduces radially outward from the central part.

2. Current collecting plate according to Claim 1, **characterised in that** a transition portion is formed between the radial extension edge and the circumferential extension edge of each blade component, and an opening region is formed between a transition portion of the first blade component and an adjacent transition portion of the second blade component, the opening region being connected to the slot,
preferably, a width of the opening region gradually increases radially outward.

3. Current collecting plate according to either Claim 1 or Claim 2, **characterised in that** the current collecting plate is a negative electrode current collecting plate (42), the negative electrode current collecting plate having a first side (42a) that faces a negative electrode end (18b) of an electrode assembly (18) of the battery unit (10), and an opposite second side (42b) that faces a negative electrode terminal (34) of the battery unit (10),
wherein the central part of the negative electrode current collecting plate comprises a boss (4211) and a connecting part (4212), the boss being weldable to the negative electrode terminal (34), to electrically connect the negative electrode current collecting plate (42) to the negative electrode terminal (34), and
wherein each blade component of the negative electrode current collecting plate is constructed to be weldable to the negative electrode end (18b) of the electrode assembly by means of a surface located on the first side (42a) of the current collecting plate, to electrically connect the negative electrode current collecting plate to the negative electrode end (18b) of the electrode assembly.

4. Current collecting plate according to Claim 3, **characterised in that** the boss (4211) and the blade component are connected to each other by means of the connecting part (4212).

5. Current collecting plate according to either Claim 3 or Claim 4, **characterised in that** a plane in which the boss is located is parallel to a plane in which the blade component is located, wherein a ratio of a height difference in an axial direction between the plane in which the boss is located and the plane in which the blade component is located to a thickness of the current collecting plate is about 0.1 to about 1.5.

6. Current collecting plate according to any one of Claims 3 to 5, **characterised in that** a ratio of a radial dimension of the boss to a radial dimension of the current collecting plate is about 0.1 to about 0.35.

7. Current collecting plate according to any one of Claims 3 to 6, **characterised in that** the boss comprises an end surface, the end surface being constructed to be weldable to the negative electrode terminal (34), wherein the end surface is a flat surface.

8. Current collecting plate according to any one of Claims 1 to 7, **characterised in that** the current collecting plate is a positive electrode current collecting plate (38),
wherein a central part of the positive electrode current collecting plate comprises a hole (3811) that is coaxial with a central hole (58) of the electrode assembly of the battery unit, and
wherein an extension part of the positive electrode current collecting plate further comprises a connecting part (3824) located between two blade components, the connecting part extending radially further than the blade component and being constructed to be weldable to a positive electrode terminal (30) of the battery unit, to electrically connect the positive electrode current collecting plate (38) to the positive electrode terminal (30), and
wherein each blade component of the positive electrode current collecting plate is constructed to be weldable to a positive electrode end (18a) of the electrode assembly by means of a surface located on a side of the positive electrode current collecting plate that faces the positive electrode end of the electrode assembly, to electrically connect the positive electrode current collecting plate to the positive electrode end of the electrode assembly,
preferably, the connecting part (3824) of the positive electrode current collecting plate has a strip shape that is able to extend from the central part of the positive electrode current collecting plate to the positive electrode terminal (30).

9. Current collecting plate according to any one of Claims 1 to 8, **characterised in that** the current collecting plate comprises at least three blade components, and the slot is comprised between any two directly adjacent blade components of the at least three blade components, and a shape and a size of each slot are the same as the shape and size of the other slots.

10. Current collecting plate according to any one of Claims 1 to 9, **characterised in that** a range of a ratio of a width of the slot at a position near the central part to a width at a position remote from the central part is about 1.1 to about 20,
preferably, a range of a ratio of a width of the slot at a position near the central part to a width at a position remote from the central part is about 1.2 to about 5.

11. Current collecting plate according to any one of Claims 1 to 10, **characterised in that** the current collecting plate is an integral member obtained by means of performing a material removing operation and/or stamping operation on a metal plate, and
preferably, a thickness of the current collecting plate is the same.

12. Current collecting plate according to any one of Claims 1 to 11, **characterised in that** an outer peripheral edge of the blade component is in an overall arc shape.

13. Current collecting plate according to any one of Claims 1 to 12, **characterised in that** an outer peripheral edge of the blade component is formed with a notch (42214).

14. Battery unit (10), comprising:
a housing (14), the housing comprising a closed end (14b) and an open end (14a) that is opposite the closed end; and
an electrode assembly (18), the electrode assembly being positioned in the housing, and being located between the closed end and the open end, and the electrode assembly comprising a negative electrode end near the closed end and a positive electrode end near the open end,
**characterised in that** the battery unit further comprises the current collecting plate according to any one of Claims 1 to 13.

15. Battery unit according to Claim 14, **characterised in that**
the closed end of the housing is integrated with a negative electrode terminal (34), or the closed end forms a negative electrode terminal; and
wherein the battery unit further comprises a cover that cooperates with the open end of the housing to close the interior of the battery unit, the cover being integrated with a positive electrode terminal (30), or the cover forming a positive electrode terminal.
